# EUROPÄISCHE PATENTANMELDUNG

(11) **EP 3 112 075 A1**
(43) Veröffentlichungstag der Anmeldung: **04.01.2017**
(21) Anmeldenummer: 15175094.0
(22) Anmeldetag: 02.07.2015
(51) Int. Cl.: B23K 26/16, B23K 26/144, B23K 26/142, B31B 1/14

(54) **VERFAHREN UND VORRICHTUNG ZUR BEARBEITUNG EINES SUBSTRATS**

(71) Anmelder: Mayr-Melnhof Karton AG, 1041 Wien (AT)
(72) Erfinder: VORENKAMP, Harman, 71549 Auenwald (DE)
(74) Vertreter: Hofstetter, Schurack & Partner

(57) **Zusammenfassung**

Die Erfindung betrifft ein Verfahren zur Bearbeitung eines Substrats (18), insbesondere eines Verpackungsmaterials aus Papier, Karton, Kunststoff oder dergleichen, , oder eines Verbundstoffs umfassend das Substrat, mittels wenigstens einer Lasereinrichtung (14), umfassend zumindest die folgenden Schritte: Steuern und Ausrichten von zumindest einem mittels der Lasereinrichtung (14) erzeugten Laserstrahls (16) zur Bearbeitung des Substrats (18) innerhalb mindestens eines Bearbeitungsbereichs (22); Erzeugen eines Luftstroms (28) in zumindest einem Teilbereich des Bearbeitungsbereichs (22) zum zumindest teilweisen Entfernen von durch die Laserstrahlbearbeitung erzeugten Abgasen, Feststoffpartikel, Stäuben, Verdampfungs- oder Zersetzungsprodukten (24) aus zumindest diesem Teilbereich des Bearbeitungsbereichs (22) und Erwärmen von zumindest dem die Abgase, Feststoffpartikel, Stäube, Verdampfungs- und/oder Zersetzungsprodukte (24) enthaltenden Teilbereichs des Bearbeitungsbereichs (22) und/oder des Luftstroms (28) auf eine Temperatur zwischen 30°C und 400°C. Die Erfindung betrifft weiterhin eine Vorrichtung zur Bearbeitung eines Substrats (18), insbesondere eines Verpackungsmaterials aus Papier, Karton, Kunststoff oder dergleichen, oder eines Verbundstoffs umfassend das Substrat.

## Beschreibung

Die vorliegende Erfindung betrifft ein Verfahren und eine Vorrichtung zur Bearbeitung eines Substrats, insbesondere eines Verpackungsmaterials aus Papier, Karton, Kunststoff oder dergleichen, oder eines Verbundstoffs umfassend das Substrat, umfassend wenigstens eine Lasereinrichtung.

Bei der Herstellung von Faltschachteln als Primär- oder Sekundärverpackung werden üblicherweise Materialien wie Papier, Karton, Graukarton, Vollpappe oder Kunststoff als Packstoff verwendet. Zur Bearbeitung derartiger Substrate, insbesondere zur Herstellung von sogenannten Zuschnitten, ist es bekannt, Laser einzusetzen. Mittels Laserstrahlen erfolgt dabei ein Abtrag des Substrats in vordefinierten Bereichen. Mithilfe der Laserablation können die Materialien geschnitten, geritzt, gerillt oder perforiert werden.

Als nachteilig an den bekannten Verfahren und Vorrichtungen ist der Umstand anzusehen, dass bei einem Laserabtrag an dem Substrat, insbesondere bei Zellstoff oder Holzfasern enthaltenden Materialien wie Papier oder Karton, Konglomerate aus den feuchten Laserabgasen, den freigesetzten Feststoffpartikeln, Stäuben und/oder anderen Verdampfungs- und Zersetzungsprodukten entstehen. Diese verunreinigen insbesondere vorhandene Abluftsysteme, welche nur mit hohem Aufwand gereinigt werden können.

Aufgabe der vorliegenden Erfindung ist es, ein gattungsgemäßes Verfahren und eine gattungsgemäße Vorrichtung bereitzustellen, welche eine Konglomeratbildung bei einem Laserabtrag eines Substrats minimiert oder verhindert.

Die Aufgaben werden erfindungsgemäß durch ein Verfahren mit den Merkmalen des Patentanspruchs 1 sowie durch eine Vorrichtung mit den Merkmalen des Patentanspruchs 7 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft ein Verfahren zur Bearbeitung eines Substrats, insbesondere eines Verpackungsmaterials aus Papier, Karton, Kunststoff oder dergleichen, oder eines Verbundstoffs umfassend das Substrat, mittels wenigstens einer Lasereinrichtung, wobei das Verfahren zumindest die folgenden Schritte umfasst: Steuern und Ausrichten von zumindest einem mittels der Lasereinrichtung erzeugten Laserstrahls zur Bearbeitung des Substrats innerhalb mindestens eines Bearbeitungsbereichs; Erzeugen eines Luftstroms in zumindest einem Teilbereich des Bearbeitungsbereichs zum zumindest teilweisen Entfernen von durch die Laser-strahlbearbeitung erzeugten Abgasen, Feststoffpartikeln, Stäuben, Verdampfungs- und/oder Zersetzungsprodukten aus zumindest diesem Teilbereich des Bearbeitungsbereichs und Erwärmen von zumindest dem die Abgase, Feststoffpartikel, Stäube, Verdampfungs- und/oder Zersetzungsprodukte enthaltenden Teilbereichs des Bearbeitungsbereichs und/oder des Luftstroms auf eine Temperatur zwischen 30°C und 400°C. Durch das erfindungsgemäße Erwärmen des Bearbeitungsbereichs des Substrats wird eine Sättigung und damit ein Kondensieren eines durch die Laserbearbeitung entstehenden Dampf-Luft-Gemisches verhindert. Damit wird aber auch ein Konglomerieren bzw. "Zusammenbacken" des kondensierten Dampf-Luft-Gemisches mit den zudem entstehenden Feststoffteilchen, Stäuben, Verdampfungs- und/oder Zersetzungsprodukte zuverlässig minimiert oder verhindert. Insbesondere bei der Verarbeitung von Papier oder Karton entstehen kohlenstoffhaltige und organische Partikel, die mit kondensierten Anteilen des Dampf-Luft-Gemisches nur schwer lösliche, zum Teil harzähnliche Teilchenkonglomerate und Verbindungen ausbilden können. Diese Konglomerate setzen sich insbesondere in Absaugvorrichtungen an, die die Abgase aus dem Bearbeitungsbereich entfernen sollen. Diese können aber nur sehr aufwendig und kostenintensiv gereinigt werden. Die Entstehung derartiger schwer löslicher Teilchenkonglomerate wird durch das gezielte Erwärmen des Bearbeitungsbereichs und/oder des den Bearbeitungsbereich durchströmenden Luftstroms deutlich verringert oder sogar verhindert, da eine Sättigung und damit ein Kondensieren des bei der Laserbearbeitung entstehenden Dampf-Luft-Gemisches zuverlässig verhindert wird und somit beispielsweise signifikant weniger oder kein Kondensat als Reaktionsfeuchte in Form von beispielsweise Reaktionswasser zur Bildung von Teilchenkonglomeraten zur Verfügung steht. Die Bildung schwer löslicher und damit auch schwer aus dem System zu entfernender Teilchenkonglomerate wird zuverlässig verhindert. Damit entfällt aber auch eine aufwendige Reinigung der entsprechenden Absaugvorrichtungen. Je nach Materialeigenschaften des Substrats, insbesondere den Feuchtigkeitsgehalt des Substrats, wird die notwendige Temperatur im Bearbeitungsbereich eingestellt und gewählt. Unter einem Temperaturbereich zwischen 30°C und 400°C liegend werden folgende Einzeltemperaturen verstanden: 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, 145°C, 150°C, 155°C, 160°C, 165°C, 170°C, 175°C, 180°C, 185°C, 190°C, 195°C, 200°C, 205°C, 210°C, 215°C, 220°C, 225°C, 230°C, 235°C, 240°C, 245°C, 250°C, 255°C, 260°C, 265°C, 270°C, 275°C, 280°C, 285°C, 290°C, 295°C, 300°C, 305°C, 310°C, 315°C, 320°C, 325°C, 330°C, 335°C, 340°C, 345°C, 350°C, 355°C, 360°C, 365°C, 370°C, 375°C, 380°C, 385°C, 390°C, 395°C, 400°C. Auch Zwischenwerte sind denkbar. Das Substrat kann dabei ein bahnförmiger, Zellstoff enthaltender Packstoff sein.

Insbesondere kann auch ein Bereich zwischen dem Bearbeitungsbereich und mindestens einer Abscheidevorrichtung zur Abscheidung und/oder Filtration von durch die Laserbearbeitung entstehenden Abgasen, Feststoffpartikeln, Stäuben, Verdampfungs- und/oder Zersetzungsprodukten auf eine Temperatur zwischen 30°C und 400°C erwärmt werden. Damit kann zuverlässig verhindert werden, dass es noch vor einem entsprechenden Abscheiden und/oder Filtern des durch die Laserbearbeitung entstehenden Dampf-Luft-Gemisches zur Entstehung von schwer löslichen Teilchenkonglomeraten kommen kann. Die Abscheidevorrichtung kann dabei ein Nass-, Öl-, Wasser- oder Luftabscheider, eine Filtervorrichtung, eine Absorptionseinrichtung oder eine Kombination daraus sein. Grundsätzlich können alle geeigneten Trennvorrichtungen zur Trennung von Stoffgemischen verwendet werden.

Die Lasereinrichtung kann dabei als abtragende Schneideinrichtung grundsätzlich zum Rillen, Ritzen, Schneiden und/oder Perforieren des Substrats, insbesondere eines bahnförmigen oder bogenförmigen Verpackungsmaterials aus Papier, Karton, Kunststoff oder dergleichen verwendet werden. Im Unterschied zu mechanischen Trennwerkzeugen erlaubt die Lasereinrichtung dabei eine erhöhte Flexibilität sowie die Möglichkeit zur Ausbildung von geometrisch komplexen Biege-, Falt- und Schnittlinien ohne kompliziertem und aufwendigem Werkzeugwechsel.

In weiteren vorteilhaften Ausgestaltungen des erfindungsgemäßen Verfahrens ist die Lasereinrichtung relativ zu einer Laufrichtung des Substrats, z.B. quer oder senkrecht zu der Laufrichtung, bewegbar und/oder umfasst ein steuerbares und/oder regelbares optisches System zum Ablenken und/oder Fokussieren ihres Laserstrahls. Dies erlaubt besonders hohe Bearbeitungs- und damit Transportgeschwindigkeiten sowie die Ausbildung besonders komplexer Schnitt- und Biegelinien. Die Lasereinrichtung kann aber auch ortsfest im Bereich des Substrats angeordnet sein. Zudem kann der Laserstrahl in mindestens einer Bestrahlungsrichtung fixiert sein.

In weiteren vorteilhaften Ausgestaltungen des erfindungsgemäßen Verfahrens wird der zumindest den Teilbereich des Bearbeitungsbereichs durchströmende Luftstrom mittels mindestens einer im Bereichs des Bearbeitungsbereichs angeordneten Absaugvorrichtung und/oder durch mindestens einen im Bereich des Bearbeitungsbereichs angeordneten Luftstromerzeuger, wie zum Beispiel ein Gebläse, erzeugt. Durch die Absaugvorrichtung und/oder den Luftstromerzeugen ist gewährleistet, dass die durch die Laserablation entstehenden Abgase, Feststoffpartikel, Stäube, Verdampfungs- und/oder Zersetzungsprodukte_zuverlässig aus dem Bearbeitungsbereich entfernt werden.

Ein zweiter Aspekt der Erfindung betrifft eine Vorrichtung zur Bearbeitung eines Substrats, insbesondere eines Verpackungsmaterials aus Papier, Karton, Kunststoff oder dergleichen oder eines Verbundstoffs umfassend das Substrat, umfassend wenigstens eine Lasereinrichtung und wenigstens eine Vorrichtung zur Erzeugung eines Luftstroms in zumindest einem Teilbereich eines Bearbeitungsbereichs des Substrats zum zumindest teilweisen Entfernen von durch eine Laserstrahlbearbeitung des Substrats erzeugten Abgasen, Feststoffpartikeln, Stäuben, Verdampfungs- und/oder Zersetzungsprodukten aus zumindest diesem Teilbereich des Bearbeitungsbereichs. Dabei weist die Vorrichtung mindestens eine Heizvorrichtung zur Erwärmung von zumindest dem die Abgase, Feststoffpartikel, Stäube, Verdampfungs- und/oder Zersetzungsprodukte enthaltenen Teilbereich des Bearbeitungsbereichs und/oder des den Bearbeitungsbereich durchströmenden Luftstroms auf eine Temperatur zwischen 30°C und 400°C auf.. Durch das erfindungsgemäße Erwärmen des Bearbeitungsbereichs des Substrats wird eine Sättigung und damit ein Kondensieren eines durch die Laserbearbeitung entstehenden Dampf-Luft-Gemisches verhindert. Damit wird aber auch ein Konglomerieren bzw. "Zusammenbacken" des kondensierten Dampf-Luft-Gemisches mit den zudem entstehenden Feststoffteilchen, Stäuben, Verdampfungs- und/oder Zersetzungsprodukte zuverlässig minimiert oder verhindert. Insbesondere bei der Verarbeitung von Papier oder Karton entstehen kohlenstoffhaltige und organische Partikel, die mit kondensierten Anteilen des Dampf-Luft-Gemisches nur schwer lösliche, zum Teil harzähnliche Teilchenkonglomerate und Verbindungen ausbilden können. Dies verhindert insbesondere eine aufwendige und kostenintensive Reinigung von Absaugvorrichtungen, die bei bekannten Vorrichtungen von den genannten schwer löslichen Teilchenkonglomeraten gesäubert werden müssen. Durch die Erwärmung von zumindest dem Teilbereich des Bearbeitungsbereichs des Substrats verhindert die erfindungsgemäße Vorrichtung zuverlässig das Entstehen derartiger schwer löslicher Teilchenkonglomerate.

Die Lasereinrichtung kann dabei als abtragende Schneideinrichtung grundsätzlich zum Rillen, Ritzen, Schneiden und/oder Perforieren des bahnförmigen Packstoffs verwendet werden. Im Unterschied zu mechanischen Trennwerkzeugen erlaubt die Lasereinrichtung dabei eine erhöhte Flexibilität sowie die Möglichkeit zur Ausbildung von geometrisch komplexen Biege- und Schnittlinien ohne komplizierten und aufwändigen Werkzeugwechsel. Dabei kann grundsätzlich vorgesehen sein, dass die Lasereinrichtung mehrere Laserquellen, beispielsweise Laserdioden, umfasst. Ebenso können mehrere gleich oder unterschiedlich ausgebildete Lasereinrichtungen vorgesehen sein, um beispielsweise ein sogenanntes Laserarray auszubilden.

In Abhängigkeit des Substrats und der durchzuführenden Bearbeitung hat es sich bei der Herstellung von Verpackungen aus Karton als vorteilhaft gezeigt, wenn die Lasereinrichtung wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W umfasst. Hierdurch wird eine besonders schnelle und zuverlässige Bearbeitung des Substrats, insbesondere eines bahn- oder bogenförmigen Packstoffs ermöglicht. UV-Laser und IR-Laser erzeugen Strahlung in unterschiedlichen Wellenlängenbereichen, wodurch optimale Bearbeitungsergebnisse für unterschiedliche Substrate und Packstoffe sichergestellt werden können. Indem der Laser gepulst, also beispielsweise im Nano-, Piko-, Femto- oder Attosekundenbereich betreibbar ist, können hohe Spitzenintensitäten mit sehr kurzer Dauer erzeugt werden, wodurch ein besonders präziser Materialabtrag des Substrats bzw. Packstoffs ermöglicht ist. Je nach verwendetem Substrat oder Packstoff hat es sich als vorteilhaft gezeigt, wenn die Leistung des Lasers über 1 W liegt und beispielsweise im Bereich von 5 Watt bis 10000 Watt gewählt ist.

In einer weiteren vorteilhaften Ausgestaltung der Erfindung ist vorgesehen, dass die Lasereinrichtung relativ zu einer Transportrichtung des Substrats bewegbar ist und/oder dass die Lasereinrichtung ein steuerbares und/oder regelbares optisches System zum Ablenken und/oder Fokussieren ihres Laserstrahls umfasst. Dies erlaubt besonders hohe Bearbeitungs- und damit Transportgeschwindigkeiten sowie die Ausbildung besonders komplexer Schnitt- und Biegelinien.

In weiteren vorteilhaften Ausgestaltungen des erfindungsgemäßen Verfahrens umfasst die Heizvorrichtung wenigstens eine elektrische Heizvorrichtung, wenigstens eine Lasereinrichtung, wenigstens einen Infrarotstrahler, wenigstens einen UV-Strahler, wenigstens eine Öl- oder Gasheizung, wenigstens eine Ultraschallvorrichtung oder wenigstens einen Wärmetauscher oder eine Kombination daraus. Auch andere Heizvorrichtungen sind denkbar. Wird eine Lasereinrichtung zur Erwärmung von zumindest dem die Abgase, Feststoffpartikel und/oder Stäube enthaltenen Teilbereich des Bearbeitungsbereichs des Substrats verwendet, so kann eine von der Lasereinrichtung zur Ablation des Substrats unterschiedliche Lasereinrichtung oder auch nur eine Lasereinrichtung zur Ablation des Materials und der Erwärmung des Bearbeitungsbereichs verwendet werden. Entscheidend ist, dass die Heizvorrichtung den zumindest die Abgase, Feststoffpartikel, Stäube, Verdampfungs- und/oder Zersetzungsprodukte enthaltenden Teilbereich des Bearbeitungsbereichs und/oder den Luftstrom auf eine Temperatur zwischen 30°C und 400°C erwärmt. In diesem Temperaturbereich kann eine Kondensation des durch die Laserbearbeitung entstehenden Dampf-Luft-Gemisches verhindert bzw. minimiert werden.

In weiteren vorteilhaften Ausgestaltungen der erfindungsgemäßen Vorrichtung umfasst die Vorrichtung zur Erzeugung des zumindest den die Abgase, Feststoffpartikel, Stäube, Verdampfungs- und/oder Zersetzungsprodukte enthaltenden Teilbereichs des Bearbeitungsbereichs durchströmenden Luftstroms mindestens eine im Bereich des Bearbeitungsbereichs angeordnete Absaugvorrichtung und/oder mindestens einen in dem Bereich des Bearbeitungsbereichs angeordneten Luftstromerzeuger, insbesondere ein Gebläse. Die Absaugvorrichtung kann dabei zudem eine Filtervorrichtung zur Rückhaltung der Feststoffpartikel und/oder Stäube umfassen. Durch die Absaugvorrichtung beziehungsweise durch den Luftstromerzeuger ist gewährleistet, dass ein konstanter Luftstrom zumindest den relevanten Teilbereich des Bearbeitungsbereichs durch- beziehungsweise überströmt, sodass es zu einem kontinuierlichen Abtransport der durch die Laserablation entstehenden Abgase, Feststoffpartikel, Stäube, Verdampfungs- und/oder Zersetzungsprodukte kommt.

Der Luftstromerzeuger kann dabei mindestens einen ersten Luftführungskanal umfassen, wobei mindestens eine Öffnung des ersten Luftführungskanals in Richtung des Bearbeitungsbereichs des Substrats ausgerichtet ist. Durch die Ausgestaltung des ersten Luftführungskanals ist es möglich, einen in der Richtung definierten und kontinuierlichen Luftstrom in Richtung des Bearbeitungsbereichs des Substrats zu leiten. Zudem besteht die Möglichkeit, dass mindestens ein Heizelement der Heizvorrichtung zur Erwärmung des Luftstroms innerhalb des ersten Luftführungskanals oder im Bereich der Öffnung des ersten Luftführungskanals angeordnet ist. Damit kann auf konstruktiv einfache Art und Weise der zur Verringerung der Luftfeuchtigkeit in dem Bearbeitungsbereich des Substrats notwendige warme Luftstrom erzeugt werden. Als Heizelemente können beispielhaft ein Heizdraht oder ein PTC-Element verwendet werden. Der Luftstrom kann aber auch bereits vor dem Eintritt oder nach seinem Austritt in bzw. aus dem ersten Luftführungskanal erwärmt werden. Die Temperatur des Luftstroms kann wiederum in einem Bereich zwischen 30°C und 400°C liegen.

Des Weiteren kann die erfindungsgemäße Vorrichtung mindestens eine Abscheidevorrichtung zur Abscheidung und/oder Filtration von durch die Laserbearbeitung entstehenden Abgasen, Feststoffpartikeln, Stäuben, Verdampfungs- und/oder Zersetzungsprodukten aufweisen. Die Abscheidevorrichtung kann dabei ein Nass-, Öl-, Wasser- oder Luftabscheider, eine Filtervorrichtung, eine Absorptionseinrichtung oder eine Kombination daraus sein. Grundsätzlich können alle geeigneten Trennvorrichtungen zur Trennung von Stoffgemischen verwendet werden.

In einer weiteren vorteilhaften Ausgestaltung der erfindungsgemäßen Vorrichtung sind die Absaugvorrichtung in Laufrichtung des Substrats stromabwärts und der Luftstromerzeuger in Laufrichtung des Substrats stromaufwärts, oder umgekehrt, angeordnet. Durch eine derartige Anordnung ist gewährleistet, dass ein kontinuierlicher, erwärmter Luftstrom in den Bearbeitungsbereich des Substrats geleitet wird und zugleich die entstehenden Abgase, Feststoffpartikel, Stäube, Verdampfungs- und/oder Zersetzungsprodukte zuverlässig aus dem Bearbeitungsbereich entfernt werden.

Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Dabei zeigt:
- Fig. 1: eine schematische Darstellung einer erfindungsgemäßen Vorrichtung zur Bearbeitung eines Substrats gemäß einem ersten Ausführungsbeispiel; und
- Fig. 2: eine schematische Darstellung einer erfindungsgemäßen Vorrichtung zur Bearbeitung eines Substrats gemäß einem zweiten Ausführungsbeispiel.

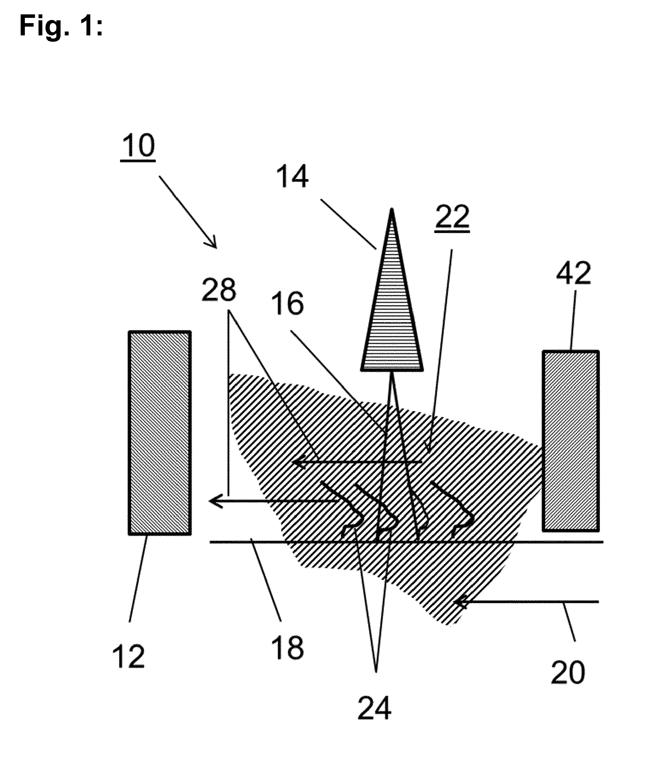

Fig. 1 zeigt eine schematische Darstellung einer erfindungsgemäßen Vorrichtung 10 zur Bearbeitung eines Substrats 18 mittels einer Lasereinrichtung 14. Über die Lasereinrichtung 14 wird mindestens ein Laserstrahl 16 erzeugt und auf das Substrat 18 gelenkt. Bei dem Substrat 18 handelt es sich gemäß dem Ausführungsbeispiel um einen bahnförmigen, Zellstoff enthaltenden Packstoff, nämlich ein Verpackungsmaterial aus Karton. Das bahnförmige Substrat 18 kann dabei von einer Rolle oder als Einzelbahnen bereitgestellt werden. Zudem kann das Substrat 18 bedruckt oder unbedruckt sein und besteht im vorliegenden Ausführungsbeispiel aus Karton mit einer Grammatur von etwa 150 g/m²m², wobei grundsätzlich auch andere Materialien wie Graukarton oder Vollpappe beziehungsweise Papiersorten mit Grammaturen zwischen 40 g/m² und 1000 g/m², insbesondere zwischen 120 g/m² und 250 g/m² vorgesehen sein können. Auch Kunststoffmaterialien können verwendet werden. Die Vorrichtung 10 umfasst dabei eine Vorrichtung zur Erzeugung eines Luftstroms 28 in zumindest einem Teilbereich eines Bearbeitungsbereichs 22 des Substrats 18. Durch den Luftstrom 28 erfolgt ein zumindest teilweises Entfernen von durch eine Laserstrahlbearbeitung beziehungsweise Laserablation des Substrats 18 erzeugten Abgasen, Feststoffpartikeln, Stäuben, Verdampfungs- und/oder Zersetzungsprodukten 24 aus zumindest diesem Teilbereich des Bearbeitungsbereichs 22. In dem dargestellten Ausführungsbeispiel handelt es sich bei der Vorrichtung zur Erzeugung des Luftstroms 28 um eine im Bereich des Bearbeitungsbereichs 22 angeordnete Absaugvorrichtung 12. Die Absaugvorrichtung 12 ist in dem dargestellten Ausführungsbeispiel in einer Laufrichtung 20 des Substrats 18 stromabwärts angeordnet. Die Absaugvorrichtung 12 ist dabei derart dimensioniert, dass ein regelmäßiger und genügend großer Luftstrom 28 entsteht. Zudem umfasst die Absaugvorrichtung 12 eine Filtervorrichtung (nicht dargestellt) zur Rückhaltung der abgesaugten Feststoffpartikel, Stäube, Verdampfungs- und/oder Zersetzungsprodukte.

Des Weiteren erkennt man, dass die Vorrichtung 10 eine Heizvorrichtung 42 zur Erwärmung von zumindest dem die Abgase, Feststoffpartikel, Stäube, Verdampfungs- und/oder Zersetzungsprodukte 24 enthaltenden Teilbereichs des Bearbeitungsbereichs 22 aufweist. Durch das Erwärmen des Bearbeitungsbereichs 22 ergibt sich eine signifikante Verringerung der Luftfeuchtigkeit zumindest innerhalb dieses Teilbereichs des Bearbeitungsbereichs 22. Durch den Laserabtrag des wasserhaltigen Substrats 18 und/oder durch die Luftfeuchtigkeit der Umgebung entstehende oder bereitstehende Reaktionswässer werden durch die Erwärmung signifikant verringert beziehungsweise vermieden. Die Entstehung schwer löslicher Teilchenkonglomerate aus dem Reaktionswasser und den durch die Laserablation entstehenden Feststoffpartikeln und/oder Stäuben wird zuverlässig verhindert. Die Temperatur in zumindest dem die Abgase, Feststoffpartikel, Stäube, Verdampfungs- und/oder Zersetzungsprodukte 24 enthaltenden Teilbereich des Bearbeitungsbereichs 22 wird auf eine Temperatur zwischen 30°C und 400°C erwärmt. Die exakte Temperatur beziehungsweise Temperaturbereich im Bearbeitungsbereich richten sich nach dem Material des Substrats, insbesondere nach dem Wassergehalt des Substrats 18.

In Fig. 1 ist der Bereichs erhöhter Temperatur im Bearbeitungsbereich 22 des Substrats 18 schraffiert dargestellt. Man erkennt, dass der Bereich erhöhter Temperatur auch außerhalb des eigentlichen Bearbeitungsbereichs 22, das heißt in der Umgebung des Bearbeitungsbereichs 22 ausgebildet sein kann.

Bei der Heizvorrichtung 42 kann es sich um eine elektrische Heizvorrichtung, insbesondere einen Heizstrahler, einen Infrarotstrahler, einen UV-Strahler, eine Öl- oder Gasheizung, eine Ultraschallvorrichtung oder einen Wärmetauscher oder eine Kombination daraus handeln. Zudem besteht die Möglichkeit, dass der Bearbeitungsbereich 22 mittels Laserenergie erwärmt wird.

Die Lasereinrichtung 14 umfasst im gezeigten Ausführungsbeispiel einen im Picosekundenbereich gepulst betreibbaren CO₂-Laser mit einer Leistung von 50 W und dient in erster Linie zum Schneiden, Rillen und Perforieren des Substrats 18. Die Lasereinrichtung 14 ist relativ zur Transportrichtung 20 des bahnförmigen Substrats 18 bewegbar. Zusätzlich kann der Laserstrahl 16 über ein regelbares optisches System (nicht gezeigt) abgelenkt und fokussiert werden, so dass besonders komplexe Schnitt- und Rilllinien im Substrat 18 erzeugbar sind.

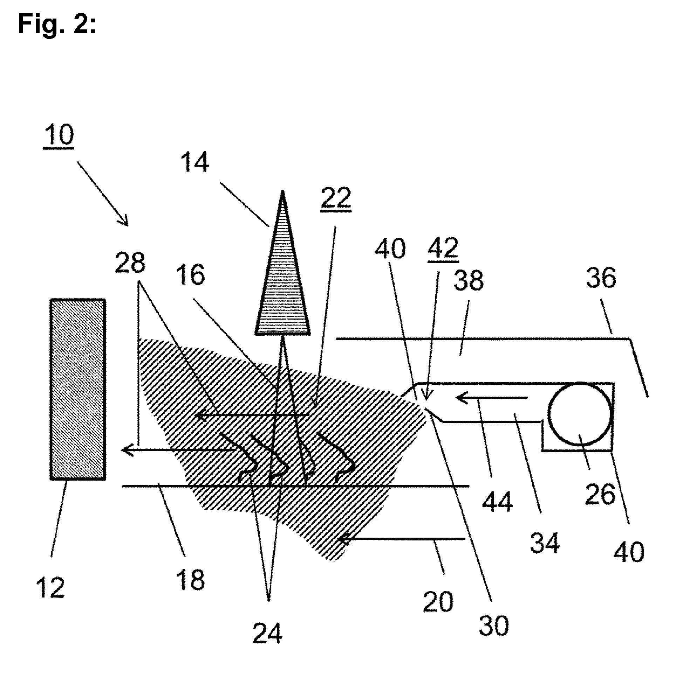

Fig. 2 zeigt eine schematische Darstellung einer erfindungsgemäßen Vorrichtung 10 zur Bearbeitung des Substrats 18 gemäß einem zweiten Ausführungsbeispiel. Der grundsätzliche Aufbau der Vorrichtung 10 ist bereits aus der vorhergehenden Beschreibung des ersten Ausführungsbeispiels bekannt. Im Unterschied zum ersten Ausführungsbeispiel umfasst die in Fig. 2 gezeigte Vorrichtung 10 zudem einen im Bereich des Bearbeitungsbereichs 22 angeordneten Luftstromerzeuger 26. Bei dem dargestellten Luftstromerzeuger 26 handelt es sich um ein Gebläse. Zudem umfasst der Luftstromerzeuger 26 einen ersten Luftführungskanal 34, der eine Öffnung 40 in Richtung des Bearbeitungsbereichs 22 des Substrats aufweist. Zudem wird in dem dargestellten zweiten Ausführungsbeispiel der Luftstrom 44, der durch den Luftstromerzeuger 26 erzeugt wird, im Bereich der Öffnung 40 mittels eines Heizelements 30 erwärmt. Der Luftstrom 44 tritt also bereits in erwärmtem Zustand aus dem Luftstromerzeuger 26 in den Bearbeitungsbereich 22 des Substrats beziehungsweise der Lasereinrichtung 16 aus. Über die Absaugvorrichtung 12 werden die entstehenden Abgase, Feststoffpartikel und/oder Stäube 24, die mittels des erwärmten Luftstroms 28 getrocknet worden sind, aus dem Bearbeitungsbereich 22 abgesaugt.

Des Weiteren erkennt man, dass zwischen einem Gehäuse 34 des Luftstromerzeugers 26 und einer Abdeckung 36 der Vorrichtung 10 ein zweiter Luftführungskanal 38 ausgebildet ist. Über den zweiten Luftführungskanal 38 kann eine zusätzliche Zufuhr eines Luftstroms erfolgen.

Die vorliegende Erfindung umfasst auch mit dem erfindungsgemäßen Verfahren oder der erfindungsgemäßen Vorrichtung hergestellte Zuschnitte für Verpackungen, insbesondere Faltschachteln aus Karton.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

## Patentansprüche

1. Verfahren zur Bearbeitung eines Substrats (18), insbesondere eines Verpackungsmaterials aus Papier, Karton, Kunststoff oder dergleichen, oder eines Verbundstoffs umfassend das Substrat, mittels wenigstens einer Lasereinrichtung (14), umfassend zumindest die folgenden Schritte:
- Steuern und Ausrichten von zumindest einem mittels der Lasereinrichtung (14) erzeugten Laserstrahls (16) zur Bearbeitung des Substrats (18) innerhalb mindestens eines Bearbeitungsbereichs (22);
- Erzeugen eines Luftstroms (28) in zumindest einem Teilbereich des Bearbeitungsbereichs (22) zum zumindest teilweisen Entfernen von durch die Laserstrahlbearbeitung erzeugten Abgasen, Feststoffpartikel, Stäuben, Verdampfungs- und/oder Zersetzungsprodukten (24) aus zumindest diesem Teilbereich des Bearbeitungsbereichs (22); und
- Erwärmen von zumindest dem die Abgase, Feststoffpartikel, Stäube, Verdampfungs- und/oder Zersetzungsprodukte (24) enthaltenden Teilbereichs des Bearbeitungsbereichs (22) und/oder des Luftstroms (28) auf eine Temperatur zwischen 30°C und 400°C.

2. Verfahren nach Anspruch 1,
**dadurch gekennzeichnet, dass**
mittels des Laserstrahls (16) ein Schneiden und/oder Ritzen und/oder Rillen und/oder Perforieren des Substrats (18) durchgeführt wird.

3. Verfahren nach Anspruch 1 oder 2,
**dadurch gekennzeichnet, dass**
die Lasereinrichtung (14) relativ zu einer Laufrichtung (20) des Substrats (18) bewegbar ist und/oder dass die Lasereinrichtung (14) ein steuerbares und/oder regelbares optisches System zum Ablenken und/oder Fokussieren ihres Laserstrahls (16) umfasst.

4. Verfahren nach einem der vorhergehenden Ansprüche,
**dadurch gekennzeichnet, dass**
der zumindest den Teilbereich des Bearbeitungsbereichs (22) durchströmende Luftstrom (28) mittels mindestens einer im Bereich des Bearbeitungsbereichs (22) angeordneten Absaugvorrichtung (12) und/oder durch mindestens einen im Bereich des Bearbeitungsbereichs (22) angeordneten Luftstromerzeuger (26) erzeugt wird.

5. Verfahren nach einem der vorhergehenden Ansprüche,
**dadurch gekennzeichnet, dass**
ein Bereich zwischen dem Bearbeitungsbereich und mindestens einer Abscheidevorrichtung zur Abscheidung und/oder Filtration von durch die Laserbearbeitung entstehenden Abgasen, Feststoffpartikeln, Stäuben, Verdampfungs- und/oder Zersetzungsprodukten (24) auf eine Temperatur zwischen 30°C und 400°C erwärmt wird.

6. Verfahren nach einem der vorhergehenden Ansprüche,
**dadurch gekennzeichnet, dass**
das Substrat (18) ein bahn- oder bogenförmiger Zellstoff enthaltender Packstoff ist.

7. Vorrichtung zur Bearbeitung eines Substrats (18), insbesondere eines Verpackungsmaterials aus Papier, Karton, Kunststoff oder dergleichen, oder eines Verbundstoffs umfassend das Substrat, umfassend wenigstens eine Lasereinrichtung (14) und wenigstens eine Vorrichtung zur Erzeugung eines Luftstroms (28) in zumindest einem Teilbereich eines Bearbeitungsbereichs (22) des Substrats (18) zum zumindest teilweisen Entfernen von durch eine Laserstrahlbearbeitung des Substrats (18) erzeugten Abgasen, Feststoffpartikel, Stäuben, Verdampfungs- und/oder Zersetzungsprodukten (24) aus zumindest diesem Teilbereich des Bearbeitungsbereichs (22) des Substrats (18), **dadurch gekennzeichnet, dass**
die Vorrichtung (10) mindestens eine Heizvorrichtung (42) zur Erwärmung von zumindest dem die Abgase, Feststoffpartikel, Stäube, Verdampfungsund/oder Zersetzungsprodukte (24) enthaltenden Teilbereichs des Bearbeitungsbereichs (22) und/oder des Luftstroms (28) auf eine Temperatur zwischen 30°C und 400°C aufweist.

8. Vorrichtung nach Anspruch 7,
**dadurch gekennzeichnet, dass**
die Lasereinrichtung (14) wenigstens einen UV-Laser und/oder wenigstens einen IR-Laser, insbesondere einen CO₂-Laser, und/oder wenigstens einen gepulst betreibbaren Laser und/oder wenigstens einen Laser mit einer Leistung von mindestens 1 W umfasst.

9. Vorrichtung nach Anspruch 7 oder 8,
**dadurch gekennzeichnet, dass**
die Lasereinrichtung (14) relativ zu einer Laufrichtung (20) des Substrats (18) bewegbar ist und/oder dass die Lasereinrichtung (14) ein steuerbares und/oder regelbares optisches System zum Ablenken und/oder Fokussieren ihres Laserstrahls (16) umfasst.

10. Vorrichtung nach einem der Ansprüche 7 bis 9,
**dadurch gekennzeichnet, dass**
die Vorrichtung (10) zur Erzeugung des zumindest den die Abgase, Feststoffpartikel, Stäube, Verdampfungs- und/oder Zersetzungsprodukte (24) enthaltenden Teilbereichs des Bearbeitungsbereichs (22) durchströmenden Luftstroms (28) mindestens eine im Bereich des Bearbeitungsbereichs (22) angeordnete Absaugvorrichtung (12) und/oder mindestens einen im Bereich des Bearbeitungsbereichs (22) angeordneten Luftstromerzeuger (26) umfasst.

11. Vorrichtung nach Anspruch 10,
**dadurch gekennzeichnet, dass**
die Absaugvorrichtung (12) eine Filtervorrichtung zur Rückhaltung der Feststoffpartikel, Stäube, Verdampfungs- und/oder Zersetzungsprodukte umfasst.

12. Vorrichtung nach einem der Ansprüche 7 bis 11,
**dadurch gekennzeichnet, dass**
die Heizvorrichtung (42) wenigstens eine elektrische Heizvorrichtung, wenigstens eine Lasereinrichtung, wenigstens einen Infrarotstrahler, wenigstens einen UV-Strahler, wenigstens eine Öl- oder Gasheizung, wenigstens eine Ultraschallvorrichtung oder wenigstens einen Wärmetauscher oder eine Kombination daraus, umfasst.

13. Vorrichtung nach einem der Ansprüche 10 bis 12,
**dadurch gekennzeichnet, dass**
der Luftstromerzeuger (26) mindestens einen ersten Luftführungskanal (34) umfasst, wobei mindestens eine Öffnung (40) des ersten Luftführungskanals (34) in Richtung des Bearbeitungsbereichs (22) des Substrats (18) ausgerichtet ist.

14. Vorrichtung nach Anspruch 13,
**dadurch gekennzeichnet, dass**
mindestens ein Heizelement (30) der Heizvorrichtung (42) zur Erwärmung des Luftstroms (28) innerhalb des ersten Luftführungskanals (34) oder im Bereich der Öffnung (40) angeordnet ist.

15. Vorrichtung nach einem der Ansprüche 10 bis 14,
**dadurch gekennzeichnet, dass**
die Absaugvorrichtung (12) in Laufrichtung (20) des Substrats (18) stromabwärts und der Luftstromerzeuger (26) in Laufrichtung (20) des Substrats (18) stromaufwärts, oder umgekehrt, angeordnet sind.
